# FASCICULE DE BREVET EUROPEEN

(11) **EP 3 472 843 B1**
(45) Date de publication et mention de la délivrance du brevet: **11.10.2023**
(21) Numéro de dépôt: 17745386.7
(22) Date de dépôt: 20.06.2017
(51) Int. Cl.: H01B 7/22, H01B 11/18

(54) **CÂBLE ÉLECTRIQUE COMPRENANT UNE COUCHE MÉTALLIQUE**
STROMKABEL MIT EINER METALLSCHICHT
ELECTRIC CABLE COMPRISING A METAL LAYER

(30) Priorité: 20.06.2016 FR 1655727
(43) Date de publication de la demande: 24.04.2019
(73) Titulaire: Nexans, 92400 Courbevoie (FR); Commissariat à l'Énergie Atomique et aux Énergies Alternatives, 75015 Paris (FR)
(72) Inventeur: ROUSSELET, Nicolas, 69230 Saint-genis-laval (FR); MALVACHE, Thierry, 92160 Antony (FR); SIMONATO, Jean-Pierre, 38360 Sassenage (FR); CELLE, Caroline, 42700 Firminy (FR); DESOUSANOBRE, Sonia, 38950 Saint Martin Le Vinoux (FR); YAHIAOUI, Sakina, 38220 Vizille (FR); MASSE, Florence, 38410 Saint Martin D'uriage (FR); ORDRONNEAU, Lucie, 69100 Villeurbanne (FR)
(74) Mandataire: Ipsilon
(86) Numéro de dépôt international: PCT/FR2017/051624
(87) Numéro de publication internationale: WO 2017/220920

(56) Documents cités:
- CN-A- 105 336 434
- CN-B- 102 337 101
- US-A1- 2010 139 943
- US-A1- 2011 209 894
- US-A1- 2013 025 907
- US-A1- 2016 009 934

## Description

La présente invention se rapporte à un câble électrique comprenant au moins une couche métallique, et un procédé de fabrication dudit câble.

Elle s'applique typiquement, mais non exclusivement, aux domaines des câbles électriques coaxiaux.

Un câble coaxial est classiquement un câble électrique de transmission de signaux numériques ou analogiques à haute ou basse fréquence, comprenant deux conducteurs électriques allongés séparés par une couche électriquement isolante. Ces deux conducteurs électriques sont disposés coaxialement le long du câble électrique, ou en d'autres termes les axes de symétrie centrale des deux conducteurs électriques se confondent.

Le document US 2010/0139943 décrit un câble coaxial comprenant un conducteur électrique central entouré par une couche isolante interne, la couche isolante interne étant entourée par une couche métallique frittée comprenant des nanoparticules métalliques d'une taille moyenne de 100 nm ou moins. La couche métallique est elle-même revêtue d'une couche isolante externe.

Cependant, ce type de câble coaxial présente des propriétés de percolation électrique qui ne sont pas optimisées. En outre, le procédé de fabrication de ce câble, notamment de la couche métallique frittée, est relativement complexe.

Les documents US2013/025907, US2016/009934, CN105336434, US2011/209894 et CN102337101 décrivent également l'art antérieur pertinent de câbles ou de dispositifs comprenant des nano-structures métalliques.

Le but de la présente invention est de pallier les inconvénients des techniques de l'art antérieur en proposant un câble électrique, notamment de type coaxial, avec une couche métallique facile à mettre en oeuvre, et permettant de garantir de très bonnes propriétés électriques et mécaniques quel que soit la section du câble électrique.

La présente invention a pour objet un câble électrique selon la revendication 1 comprenant :
- au moins un conducteur électrique allongé,
- au moins une couche électriquement isolante entourant ledit conducteur électrique allongé,
- au moins une couche métallique entourant ladite couche électriquement isolante,
caractérisé en ce que la couche métallique comprend des nano-fils métalliques.

Grâce à l'invention, le câble électrique présente une couche métallique avec des propriétés électriques optimisées et une grande flexibilité, tout en étant facile à mettre en oeuvre et utilisable avec tout type de câble, même de faible diamètre tel que par exemple un diamètre extérieur d'au plus 1,0 mm (millimètre), et de préférence d'au plus 0,3 mm.

Plus particulièrement, la couche métallique de l'invention peut avantageusement être utilisée en tant que couche dite « de blindage », notamment pour câble coaxial. A ce titre, la couche métallique de l'invention présente de bonnes propriétés électriques du type résistance carrée et/ou atténuation, telles qu'une résistance carrée inférieure à 10 ohm/carré, et/ou une atténuation d'au moins 20 dB pouvant aller au-delà de 40 dB, l'atténuation étant déterminée selon la norme IEC 62153-4-10 (2015).

### La couche métallique

La couche métallique de l'invention est une couche comprenant des nano-fils métalliques, entourant la couche électriquement isolante.

Au moins un des nano-fils métalliques, ou plus particulièrement les nano-fils métalliques composant la couche métallique, a un facteur de forme d'au moins 50, et de façon particulièrement préférée d'au moins 100.

Le ou lesdits nano-fil(s) métallique(s) est/sont de préférence de type lamellaire ou cylindrique.

Les nano-fils métalliques de l'invention sont donc de préférence des nano-fils qui n'ont pas une forme sphérique, ou en d'autres termes qui n'ont pas un facteur de forme égal à 1.

Dans la présente invention, le facteur de forme est typiquement le rapport entre la plus grande dimension dudit nano-fil métallique (telle que par exemple la longueur du nano-fil du type lamellaire ou cylindrique) et la plus petite dimension d'un nano-fil métallique (telle que par exemple l'épaisseur d'un nano-fil métallique du type lamellaire, ou le diamètre d'un nano-fil métallique du type cylindrique).

Le ou les nano-fil(s) métallique(s) de l'invention ont typiquement au moins une de leurs dimensions de taille nanométrique (10⁻⁹ mètre).

Plus particulièrement, le ou les nano-fil(s) métallique(s) de l'invention peu(ven)t avoir au moins une de leurs dimensions d'au plus 800 nm (nanomètres), de préférence d'au plus 600 nm, et plus préférentiellement d'au plus 400 nm.

En outre, le ou les nano-fil(s) métallique(s) de l'invention peu(ven)t avoir au moins une de leurs dimensions d'au moins 4 nm, et de préférence d'au moins 50 nm.

De préférence, le ou les nano-fil(s) métallique(s) de l'invention peu(ven)t avoir au moins un de leurs dimensions allant de 4 à 800 nm.

A titre d'exemple, en considérant des nano-fils métalliques du type cylindrique avec un diamètre et une longueur, le ou les nano-fil(s) métallique(s) de l'invention peu(ven)t avoir :
- un diamètre allant de 4 à 800 nm, et de préférence allant de 20 à 250 nm, et
- une longueur allant de 0,5 à 800 µm, et de préférence allant de 1 à 100 µm.

En considérant plusieurs nano-fils métalliques selon l'invention, on entend par le terme « dimension », la dimension moyenne en nombre de l'ensemble des nano-fils métalliques nanométriques d'une population donnée, cette dimension étant classiquement déterminée par des méthodes bien connues de l'homme du métier.

La dimension du ou des nano-fils métalliques selon l'invention peut être par exemple déterminée par microscopie, notamment par microscope électronique à balayage (MEB).

Dans la présente invention, le ou lesdits nano-fil(s) métallique(s) peu(ven)t comprendre au moins un métal choisi notamment parmi l'argent, l'or, le cuivre, le nickel, et un de leurs mélanges.

Selon l'invention, les nano-fils métalliques comprennent au moins 80% en poids de métal, par rapport au poids total dudit ou desdits nano-fil(s).

La couche métallique de l'invention peut comprendre au moins 5% en poids de nano-fils métalliques, de préférence au moins 10% en poids de nano-fils métalliques, de préférence au moins 30% en poids de nano-fils métalliques, et de préférence au moins 50% en poids de nano-fils métalliques, par rapport au poids total de la couche métallique.

Les nano-fils métalliques utilisés dans l'invention peuvent être des nano-fils métalliques disponibles dans le commerce, tels que par exemple ceux commercialisés par la société ACS Material sous la référence AgNw60IPA, ou bien ils peuvent être fabriqués selon l'une des techniques décrites dans les articles suivants, incorporés par référence dans la présente invention : Nanotechnology 24 (2013) 215501 (6pp) ; Nano Research 2014, 7(3) : 315-324.

La couche métallique de l'invention peut être obtenue selon différents procédés de fabrication.

Selon une première variante, la couche métallique peut être obtenue à partir d'une composition, notamment une composition liquide, comprenant des nano-fils métalliques et un solvant hydroxylé. Le solvant hydroxylé est destiné à être évaporé pour former la couche métallique.

De préférence, la composition de la première variante ne comprend pas de polymère et/ou de précurseur de polymère, notamment les polymères et/ou précurseurs de polymère décrits dans la deuxième variante ci-après. Dans la présente invention, on entend par « composition liquide » une composition ayant de préférence une viscosité d'au plus 10,0 pascal-seconde (Pa.s) (à 25°C).

De préférence, la quantité de nano-fils métalliques dans le solvant hydroxylé peut aller de 0,05 à 10 grammes par litre de composition.

Dans la présente invention, le solvant hydroxylé a de préférence une température d'ébullition d'au plus 200°C. Il peut être choisi parmi l'eau ou des alcools, les alcools pouvant être choisis parmi le méthanol, l'éthanol, l'isopropanol, le butanol, le cyclopentanol, et un de leurs mélanges. De préférence, le solvant hydroxylé peut être un mélange d'eau et d'un alcool. Le rapport en poids entre l'eau et l'alcool peut aller de 0,5 à 5,0, et de préférence de 1,0 à 2,0.

Dans cette première variante, la couche métallique peut comprendre au moins 80% en poids de nano-fils métalliques, de préférence au moins 90% en poids de nano-fils métalliques, et de façon particulièrement préférée 100% en poids de nano-fils métalliques, par rapport au poids total de la couche métallique.

Selon une deuxième variante, la couche métallique peut être obtenue à partir d'une composition, notamment une composition liquide, comprenant :
- des nano-fils métalliques, et
- au moins un polymère et/ou au moins un précurseur de polymère, et
- optionnellement un solvant hydroxylé, le solvant hydroxylé étant tel que défini dans la présente invention.

De préférence, le solvant hydroxylé peut être un mélange d'eau et d'un alcool. Le rapport en poids entre l'eau et l'alcool peut aller de 0,5 à 5,0, et de préférence de 1,0 à 2,0.

La composition de cette deuxième variante peut comprendre de 0,1% en poids à 15,0 % en poids de nano-fils métalliques, de préférence de 0,5 % en poids à 5,0 % en poids de nano-fils métalliques, et de préférence de 1,0 % en poids à 3,0 % en poids de nano-fils métalliques, par rapport au poids total de la composition.

La composition de cette deuxième variante peut comprendre de 0,1% en poids à 25,0 % en poids de polymère(s) et/ou de précurseur(s) de polymère, de préférence de 0,5 % en poids à 10,0 % en poids de polymère(s) et/ou de précurseur(s) de polymère, et de préférence de 1,0 % en poids à 5,0 % en poids de polymère(s) et/ou de précurseur(s) de polymère, par rapport au poids total de la composition.

Ladite composition de cette deuxième variante peut comprendre au moins 60 % en poids de solvant hydroxylé, de préférence au moins 80 % en poids de solvant hydroxylé, et de préférence au moins 90 % en poids de solvant hydroxylé, par rapport au poids total de la composition.

Dans cette seconde variante, la couche métallique est une couche comprenant en outre au moins un polymère.

Dans la présente invention, on entend par « polymère » tout type de polymère bien connu de l'homme du métier tel que homopolymère ou copolymère (e.g. copolymère séquencé, copolymère statistique, terpolymère, ...etc).

Dans cette deuxième variante, le polymère peut être du type organique, tel que par exemple un polymère choisi parmi les polymères d'oléfine, les polymères d'époxy, les polymères d'uréthanes, les polymères d'amides, les polymères de cétones, les polymères de phtalates, les polymères fluorés, les polymères du type latex (ou en d'autres termes, des dispersions de particules de polymère hydrophobe dans l'eau), les polymères de saccharide (ou en d'autres termes, les polysaccharides), les polymères vinylés, les polymères de styrène, les polymères sulfonés, et un de leurs mélanges. On peut citer comme polymères d'oléfine : les polymères d'éthylène, les polymères de propylène ; comme polymères fluorés : les polymères d'éthylène fluorés (FEP), le polyfluorure de vinylidène (PVDF), le copolymère de polyfluorure de vinylidène et de polytrifluoroéthylène (PVDF-PTrFE), le Nafion (CAS : 66796-30-3) ; comme polymères de saccharide : le chitosane, les alginates, la cellulose et ses dérivés tels que par exemple la carboxyméthyl cellulose (CMC) ; comme polymères vinylés : la polyvinylpyrrolidone (PVP) ; comme polymères de styrène : le polymère et ses dérivés, le mélange du poly(3,4-éthylènedioxythiophène) et du poly(styrène sulfonate) de sodium (PEDOT: PSS).

Le ou les précurseurs de polymère organique peuvent être par exemple des précurseurs choisis parmi des précurseurs des polymères cités ci-dessus. A titre d'exemple de précurseurs, on peut citer les dérivés du bisphénol A, comme le diglycidyl éther du bisphénol A.

Le polymère peut également être du type inorganique, tel que par exemple un polymère choisi parmi les polyorganosiloxanes.

Le ou les précurseurs de polymère inorganique peuvent être par exemple des précurseurs choisis parmi des précurseurs de polyorganosiloxanes. A titre d'exemple, on peut citer le polydiméthylsiloxane (PDMS).

Le polymère de cette seconde variante peut être fonctionnalisé ou non.

Dans cette deuxième variante, la couche métallique peut comprendre au moins 5% en poids de nano-fils métalliques, de préférence au moins 10% en poids de nano-fils métalliques, de préférence au moins 30% en poids de nano-fils métalliques.

Dans un mode de réalisation particulier de cette deuxième variante, la couche métallique peut comprendre au moins au moins 80% en poids de nano-fils métalliques, de préférence au moins 90% en poids de nano-fils métalliques, et de façon particulièrement préférée au moins 95% en poids de nano-fils métalliques, par rapport au poids total de la couche métallique.

La couche métallique de l'invention peut comprendre en outre des charges conductrices, différentes des nano-fils métalliques de l'invention.

Ces charges conductrices peuvent être des charges électriquement conductrices et/ou thermiquement conductrices.

A titre d'exemple, les charges électriquement conductrices peuvent être choisies parmi des nanotubes de carbone ou leurs dérivés, du graphène ou ses dérivés, des polymères conducteurs tels que par exemple des polymères dérivés du poly(3,4-éthylènedioxythiophène) ou de la polyaniline.

Les charges thermiquement conductrices peuvent être des charges à base de nitrure de bore et/ou d'oxydes métalliques.

Dans la présente invention, le maintien de la couche métallique peut être optimisé par une couche polymérique entourant la couche métallique, et/ou par la présence d'au moins un polymère dans la couche métallique.

On entend par « couche polymérique », une couche comprenant au moins un polymère, et de préférence au moins un polymère organique. De préférence, cette couche polymérique peut comprendre plus de 50% en poids d'un polymère par rapport au poids total de la couche polymérique.

A ce titre, lorsque la première variante décrite ci-dessus est mise en oeuvre pour la formation de la couche métallique de l'invention, le câble électrique peut comprendre de préférence une couche polymérique entourant la couche métallique, cette couche polymérique étant directement en contact physique avec la couche métallique.

Lorsque la deuxième variante décrite ci-dessus est mise en oeuvre pour la formation de la couche métallique, le câble électrique peut comprendre ou peut ne pas comprendre une couche polymérique entourant la couche métallique, cette couche polymérique étant directement en contact physique avec la couche métallique.

Dans la présente invention, l'épaisseur de la couche métallique peut aller de 20 nm (nanomètre) à 1,0 mm (millimètre), et de préférence de 50 nm à 600 nm.

Dans un mode de réalisation particulier, la couche métallique peut être directement en contact physique avec la couche électriquement isolante.

### La couche électriquement isolante

La couche électriquement isolante de l'invention entoure le conducteur électrique allongé.

Elle peut être facilement mise en forme par extrusion autour de l'élément conducteur allongé. On parle alors de couche extrudée.

Dans la présente invention, on entend par « couche électriquement isolante » une couche dont la conductivité électrique peut être d'au plus 1.10⁻⁹ S/m (siemens par mètre) (à 25°C), de préférence d'au plus 1.10⁻⁸ S/m, et de préférence d'au plus 1.10⁻¹³ S/m (à 25°C).

Dans un mode de réalisation préféré, la couche électriquement isolante peut être directement en contact physique avec le conducteur électrique allongé.

La couche électriquement isolante peut être une couche dite thermoplastique, ou en d'autres termes une couche non réticulée.

On entend par « non réticulée » une couche dont le taux de gel selon la norme ASTM D2765-01 (extraction au xylène) est d'au plus 20%, de préférence d'au plus 10%, de préférence d'au plus 5%, et de façon particulièrement préférée de 0%.

La couche électriquement isolante est une couche polymérique, comprenant au moins un polymère.

Ledit polymère est un polymère d'oléfine, et de préférence un polymère d'éthylène. Un polymère d'oléfine est classiquement un polymère obtenu à partir d'au moins un monomère d'oléfine.

A titre d'exemple, le polymère peut être choisi parmi un polyéthylène linéaire basse densité (LLDPE); un polyéthylène très basse densité (VLDPE); un polyéthylène basse densité (LDPE); un polyéthylène moyenne densité (MDPE); un polyéthylène haute densité (HDPE); un copolymère élastomère d'éthylène-propylène (EPM); un terpolymère éthylène propylène diène monomère (EPDM); un copolymère d'éthylène et de vinyl ester tel qu'un copolymère d'éthylène et d'acétate de vinyl (EVA); un copolymère d'éthylène et d'acrylate tel qu'un copolymère d'éthylène et d'acrylate de butyle (EBA) ou un copolymère d'éthylène et d'acrylate de méthyle (EMA); un copolymère d'éthylène et d'alpha-oléfine tel qu'un copolymère d'éthylène et d'octène (PEO) ou un copolymère d'éthylène et de butène (PEB); un polymère d'éthylène fluoré (FEP) ; un polymère perfluoroalkoxy (PFA), un polytétrafluoroéthylène (PTFE), et un de leurs mélanges. Les polymères mentionnés ci-dessus qui ne sont pas obtenus à partir d'un monomère d'oléfine ne font pas partie de l'invention revendiquée.

Dans un mode de réalisation particulièrement préféré, la couche électriquement isolante peut être une couche hydrophile.

Dans la présente invention, on entend par « hydrophile » une couche dont la surface présente un angle de contact (ou angle de goutte) strictement inférieur à 80°, et de préférence supérieur ou égal à 10°.

La mesure de l'angle de contact rend compte de l'aptitude d'un liquide à s'étaler sur une surface par mouillabilité. La méthode consiste à mesurer l'angle de la tangente du profil d'une goutte déposée sur la couche, avec la surface de la couche.

Cet angle de contact est typiquement mesuré à l'aide d'un goniomètre, à 25°C, en utilisant de l'eau distillée.

La couche électriquement isolante de l'invention peut être traitée avant le dépôt de la couche métallique autour de la couche électriquement isolante, afin d'améliorer les propriétés hydrophiles de sa surface externe. Ladite surface externe de la couche électriquement isolante est celle la plus éloignée du conducteur électrique allongé.

L'amélioration des propriétés hydrophiles de la surface externe de la couche électriquement isolante permet avantageusement, lorsque la couche métallique de l'invention est directement en contact physique avec la couche électriquement isolante, d'optimiser le maintien de la couche métallique à la surface de la couche électriquement isolante.

Ledit traitement de surface peut être réalisé par tout type de procédés bien connus de l'homme du métier. A ce titre, on peut citer les traitements d'oxydation de surface de la couche électriquement isolante, ou les traitements pour fonctionnaliser la surface de la couche électriquement isolante.

L'épaisseur de la couche électriquement isolante peut aller de 0,1 mm à 80 mm.

### Le conducteur électrique

Le conducteur électrique allongé de l'invention peut être un monoconducteur tel que par exemple un fil métallique, ou un multiconducteur tel qu'une pluralité de fils métalliques, torsadés ou non.

Le conducteur électrique allongé peut être réalisé à partir d'un matériau métallique notamment choisi parmi l'aluminium, un alliage d'aluminium, du cuivre, un alliage de cuivre, et une de leurs combinaisons.

La section nominale du conducteur électrique peut aller de 0,5 mm² à plus de 1200 mm², et de préférence de 50 mm² à 240 mm². La section nominale du conducteur électrique peut notamment être définie selon la norme IEC 60228 (2004).

### Le câble électrique

Le câble électrique de l'invention est de préférence un câble électrique de transmission de signaux numériques ou analogiques à haute ou basse fréquence, comprenant deux conducteurs électriques allongés (i.e. le conducteur électrique allongé et la couche métallique) séparés par la couche électriquement isolante. Ces deux conducteurs électriques sont disposés coaxialement le long du câble électrique, ou en d'autres termes les axes de symétrie centrale des deux conducteurs électriques se confondent.

Dans la présente invention, le câble électrique de l'invention peut être de préférence un câble de type coaxial.

Dans un mode de réalisation particulier, le câble électrique de l'invention peut comprendre au moins deux desdits conducteurs électriques allongés. Chaque conducteur électrique allongé peut être entouré par au moins ladite couche électriquement isolante, formant ainsi au moins deux conducteurs électriques isolés.

L'ensemble desdits conducteurs électriques isolés peut être entouré par ladite couche métallique.

De préférence, les conducteurs électriques isolés sont torsadés entre eux, et peuvent ainsi former une paire de conducteurs électriques isolés torsadée dite écrantée grâce à ladite couche métallique.

Dans ce mode de réalisation particulier, ledit câble électrique peut être du type LAN - FTP (*Local Area Network* - *Foiled twisted pair*).

Dans la présente invention, le câble électrique peut comprendre une ou plusieurs couche(s) métallique(s) conforme à l'invention.

Le câble électrique peut en outre comprendre une gaine extérieure de protection entourant la couche métallique, la gaine extérieure de protection étant de préférence une couche électriquement isolante.

Cette gaine extérieure de protection peut être directement en contact physique avec ladite couche métallique, et de ce fait elle peut ainsi servir de couche de maintien à ladite couche métallique.

La gaine extérieure de protection peut être classiquement à base d'un ou de plusieurs polymère(s) choisi(s) parmi des polymères d'oléfine, des polymères chlorés, des polymères fluorés, avec optionnellement au moins une charge ignifugeante telle que du trihydroxyde d'aluminium (ATH), du dihydroxyde de magnésium (MDH), de la craie. De préférence, la gaine de protection est une gaine dite « HFFR » pour l'anglicisme « *Halogen-Free Flame Retardant »* selon la norme IEC 60754 Parties 1 et 2 (2011).

Le câble de l'invention peut avoir un diamètre extérieur d'au plus 1,0 mm, et de préférence d'au plus 0,3 mm, notamment pour les câbles coaxiaux. Il peut avoir également un diamètre extérieur supérieur à 1,0 mm, pouvant aller jusqu'à 20 mm, notamment pour les câbles de type LAN FTP.

### Procédé de fabrication

Un autre objet conforme à l'invention est un procédé de fabrication d'un câble électrique selon l'invention, caractérisé en ce qu'il comprend l'étape suivante :
iii. former la couche métallique autour de la couche électriquement isolante, notamment à partir d'une composition liquide.

L'étape iii est l'étape de formation de la couche métallique autour de la couche électriquement isolante.

La formation de la couche métallique peut se faire par différents procédés.

Selon une première variante de l'étape iii, la couche métallique peut être obtenue à partir d'une composition, notamment d'une composition liquide, comprenant des nano-fils métalliques et un solvant hydroxylé. Le solvant hydroxylé est destiné à être évaporé pour former la couche métallique.

La formation de la couche métallique est ainsi obtenue en déposant cette composition autour de la couche électriquement conductrice, par exemple par « *spray-coating* » ou trempage.

Le « *spray-coating* » consiste à nébuliser ladite composition en direction de la couche électriquement isolante, le solvant hydroxylé s'évaporant alors au moment du dépôt pour laisser la matière sèche recouvrir la couche électriquement isolante.

Le trempage consiste à plonger, en statique ou continu, la couche électriquement isolante dans un bain de ladite composition.

Lors du retrait du solvant hydroxylé, par exemple par évaporation éventuellement sous atmosphère contrôlée, la couche métallique se forme et reste accrochée autour de la couche électriquement isolante.

Afin de faciliter l'évaporation du solvant hydroxylé, que ce soit dans la méthode dite de « *spray-coating* » ou de trempage, la couche électriquement isolante peut être chauffée avant la nébulisation, et après le dépôt, pour optimiser l'évaporation du solvant hydroxylé résiduel contenu dans la couche métallique ainsi déposée.

Selon une deuxième variante de l'étape iii, la couche métallique peut être obtenue à partir d'une composition, notamment d'une composition liquide, comprenant :
- des nano-fils métalliques, et
- au moins un polymère et/ou au moins un précurseur de polymère, et
- optionnellement un solvant hydroxylé.

Dans cette seconde variante, la couche métallique formée est ainsi une couche comprenant en outre au moins un polymère.

La formation de la couche métallique est ainsi obtenue en déposant cette composition autour de la couche électriquement conductrice, par exemple par trempage ou par extrusion selon le type de polymère(s) et/ou de précurseur(s) de polymère utilisé(s).

Le trempage consiste à plonger, en statique ou continu, la couche électriquement isolante dans un bain de ladite composition.

Lorsque qu'au moins un polymère est utilisé, la composition peut comprendre en outre un solvant destiné à dissoudre le polymère dans la composition. Ledit solvant peut être tout type de solvant bien connu de l'homme du métier, tel que par exemple choisi parmi des solvants de type hydroxylés, cétones, éthers, amines, et esters d'acides carboxyliques.

Ainsi, l'étape de dépôt de la couche métallique autour de la couche électriquement isolante peut être suivie d'une étape de traitement thermique consistant notamment à évaporer le solvant pour former la couche métallique.

Lorsque qu'au moins un précurseur de polymère est utilisé, l'étape de dépôt de la couche métallique autour de la couche électriquement isolante peut être suivie d'une étape de traitement thermique consistant notamment à chauffer la couche métallique à une température suffisante pour polymériser et/ou durcir et/ou réticuler la couche métallique.

Le procédé de fabrication du câble électrique selon l'invention peut en outre comprendre l'étape ii suivante, préalable à l'étape iii :
ii. traiter la surface extérieure de la couche électriquement isolante.

De ce fait, l'étape iii consiste à former la couche métallique autour de la couche électriquement isolante traitée à l'étape ii.

L'étape ii permet avantageusement d'optimiser les propriétés hydrophiles à la surface externe de la couche électriquement isolante formée à l'étape i.

Les propriétés hydrophiles de la couche électriquement isolante peuvent être améliorées par différents traitements de sa surface, tels que par exemple :
- en oxydant la surface de la couche électriquement isolante, ou
- en fonctionnalisant la surface de la couche électriquement isolante.

L'oxydation de surface peut être du type chimique ou physique. L'oxydation physique peut consister en une oxydation de surface par plasma ou corona. Le plasma peut être par exemple un plasma d'argon ou un plasma d'un mélange O₂/SF₆, ces plasmas étant bien connus de l'homme du métier. L'oxydation chimique peut consister à utiliser un ozoneur ou un milieu oxydant tel que par exemple un milieu à base d'espèces de type acide nitrique pur, dilué ou en mélange, d'hypochlorite de sodium ou autres.

La fonctionnalisation de surface peut consister à greffer ou à adsorber, par des techniques bien connues de l'homme du métier, des espèces chimiques à la surface de la couche électriquement isolante.

Dans un mode de réalisation préféré, l'étape ii consiste à oxyder la surface extérieure de la couche électriquement isolante.

Le procédé de fabrication du câble électrique selon l'invention peut en outre comprendre l'étape i suivante, préalable à l'étape ii ou iii :
i. former la couche électriquement isolante autour du conducteur électrique allongé.

L'étape i peut être réalisée en extrudant, par des techniques bien connues de l'homme du métier, la couche électriquement isolante autour du conducteur électrique allongé.

D'autres caractéristiques et avantages de la présente invention apparaîtront à la lumière de la description d'exemples non limitatifs d'un câble électrique selon l'invention, faits en référence à la figure unique.

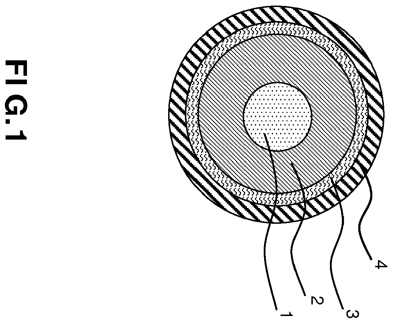

La figure 1 représente une vue schématique en coupe transversale d'un câble électrique conforme à l'invention.

Pour des raisons de clarté, seuls les éléments essentiels pour la compréhension de l'invention ont été représentés de manière schématique, et ceci sans respect de l'échelle.

Le câble électrique, illustré dans la figure 1, est un câble dit coaxial, comprenant un élément électriquement conducteur 1 central allongé, notamment en cuivre ou en aluminium, comprenant une pluralité de fils métalliques, l'élément électriquement conducteur ayant une section nominale de 0,0020 mm² (diamètre de 0,05 mm).

Le câble électrique comprend en outre plusieurs couches disposées successivement et coaxialement autour de cet élément conducteur 1, à savoir :
- une couche 2 électriquement isolante d'un polymère éthylène fluoré (FEP) commercialisée par la société Chemours sous la référence FEP 106,
- une couche métallique 3 comprenant des nano-fils métalliques selon l'invention,
- une gaine de protection 4 d'un polymère éthylène fluoré (FEP) commercialisée par la société Chemours sous la référence FEP 106.

Les couches 2 et 4 sont des couches polymériques classiques, extrudées par des techniques bien connues de l'homme du métier.

La couche métallique 3 du câble électrique de la figure 1 peut être réalisée selon les exemples qui vont suivre.

### Exemples de réalisation d'un câble électrique selon l'invention

### 1. A partir d'une composition comprenant des nano-fils métallique et un solvant

Un câble électrique comprenant un conducteur électrique allongé central en cuivre entouré par une couche électriquement isolante d'un polymère éthylène fluoré (FEP) commercialisée par la société Chemours sous la référence FEP 106 est traité par plasma oxygène dans les conditions suivantes : 100 millilitre d'oxygène par minute ; 120 Watt ; pendant 90 secondes.

Puis, le câble électrique ainsi traité est passé sous un système de « *spray-coating* » d'une composition liquide comprenant un solvant du type isopropanol et des nano-fils d'argent à 0,5 gramme par litre dans la composition liquide, lesdits nano-fils d'argent ayant un facteur de forme égal à 125 (nano-fils en forme de cylindre ayant les dimensions suivantes : longueur de 10 µm et diamètre de 80 nm) et étant fabriqués selon le procédé décrit dans l'article Nanotechnology 24 (2013) 215501 (6pp). La composition liquide est nébulisée sous air.

Préalablement à la nébulisation de la composition liquide, le câble électrique est préchauffé à 90°C, le solvant s'évaporant ainsi lors du dépôt.

La couche métallique est ainsi formée autour de la couche électriquement isolante, et a une épaisseur de 200 nm.

La couche métallique comprend 100 % en poids de nano-fils métalliques par rapport au poids total de la couche métallique.

Elle permet un blindage efficace avec une résistance carrée inférieure à 10 ohm/carré.

### 2. A partir d'une composition comprenant des nano-fils métallique et un précurseur de polymère organique

Un câble électrique comprenant un conducteur électrique allongé central en cuivre entouré par une couche électriquement isolante d'un polymère éthylène fluoré (FEP) commercialisée par la société Chemours sous la référence FEP 106 est traité par un passage en milieu liquide à base d'acide nitrique (mélange de 40% en poids d'acide nitrique et de 60% en poids d'acide sulfurique) durant 30 secondes, puis séché à l'air chaud.

Puis, le câble électrique ainsi traité est trempé dans une composition liquide comprenant :
- des précurseurs de résine époxy, tels que par exemple les composés référencés Araldite CY 179CH (résine époxy) et Aradur917 (durcisseur de la résine époxy), commercialisés par la société Huntsman ; et
- des nano-fils de cuivre à 1 gramme par litre dans la composition liquide, lesdits nano-fils de cuivre ayant un facteur de forme égal à 500 (nano-fils en forme de cylindre ayant les dimensions suivantes : longueur de 50 µm et diamètre de 100 nm) étant fabriqués selon le procédé décrit dans l'article Nano Research 2014, 7(3) : 315-324.

En sortie de trempage, le câble électrique ainsi trempé est chauffé à une température de 150°C pendant 2 minutes pour obtenir la résine durcie contenant les nano-fils de cuivre, autour de la couche électriquement isolante.

La couche métallique est ainsi formée autour de la couche électriquement isolante, et a une épaisseur de 300 nm.

La couche métallique comprend 50 % en poids de nano-fils métalliques par rapport au poids total de la couche métallique.

Elle permet un blindage efficace avec une résistance carrée inférieure à 10 ohm/carré.

### 3. A partir d'une composition comprenant des nano-fils métallique et au moins un polymère organique

Un câble électrique comprenant un conducteur électrique allongé central en cuivre entouré par une couche électriquement isolante d'un polymère éthylène fluoré (FEP) commercialisée par la société Chemours sous la référence FEP 106 est traité par oxydation physique du type plasma d'argon durant 120 à 180 secondes, avec une puissance de 300 watts.

Puis, le câble électrique ainsi traité est trempé dans une composition liquide comprenant :
- 1,8 % en poids de nano-fils d'argent ayant un facteur de forme égal à 125 (nano-fils en forme de cylindre ayant les dimensions suivantes : longueur de 10 µm et diamètre de 80 nm), lesdits nano-fils d'argent étant fabriqués selon le procédé décrit dans l'article Nanotechnologie 24 (2013) 215501 (6pp),
- 1,2 % en poids d'un polymère de polysaccharide du type carboxyméthyle cellulose (CMC), commercialisé par la société Sigma-Aldrich sous la référence carboxyméthyle cellulose de sodium,
- 40 % en poids de méthanol en tant que solvant, et
- 57 % en poids d'eau en tant que solvant.

Les quantités exprimées dans la composition liquide ci-dessus sont exprimées en pourcentage en poids par rapport au poids total de la composition liquide.

En sortie de trempage, le câble électrique ainsi trempé est séché jusqu'à l'évaporation du solvant. Le câble peut ensuite être chauffé à une température de 230°C pendant 2 minutes pour améliorer sa tenue mécanique et la résistance électrique.

La couche métallique est ainsi formée autour de la couche électriquement isolante, et a une épaisseur de 800 nm.

La couche métallique comprend 60 % en poids de nano-fils métalliques par rapport au poids total de la couche métallique.

Elle permet un blindage efficace avec une résistance carrée inférieure à 10 ohm/carré, et une atténuation d'au moins 20 décibels (dB) selon la norme IEC 62153-4-10 (2015).

## Revendications

1. Câble électrique comprenant :
- au moins un conducteur électrique allongé (1),
- au moins une couche électriquement isolante (2) entourant ledit conducteur électrique allongé (1),
- au moins une couche métallique (3) entourant ladite couche électriquement isolante (2),
**caractérisé en ce que** la couche métallique (3) comprend des nano-fils métalliques comprenant au moins 80% en poids de métal, au moins un des nano-fils métalliques ayant un facteur de forme d'au moins 50, et **en ce que** la couche électriquement isolante est une couche polymérique comprenant au moins un polymère d'oléfine.

2. Câble selon la revendication 1, **caractérisé en ce qu'**au moins un des nano-fils métalliques a une de ses dimensions d'au plus 400 nm.

3. Câble selon l'une quelconque des revendications précédentes, **caractérisé en ce qu'**au moins un des nano-fils métalliques comprend au moins un métal choisi parmi l'argent, l'or, le cuivre, le nickel, et un de leurs mélanges.

4. Câble selon l'une quelconque des revendications précédentes, **caractérisé en ce qu'**au moins un des nano-fils métalliques comprend au moins 10% en poids de métal par rapport au poids total dudit nano-fil.

5. Câble selon l'une quelconque des revendications précédentes, **caractérisé en ce que** la couche métallique (3) comprend au moins 5% en poids de nano-fils métalliques, et de préférence au moins 10% en poids de nano-fils métalliques, par rapport au poids total de la couche métallique.

6. Câble selon l'une quelconque des revendications 1 à 5, **caractérisé en ce que** la couche métallique (3) est telle qu'obtenue à partir d'une composition comprenant des nano-fils métalliques et un solvant hydroxylé en évaporant le solvant pour former la couche métallique.

7. Câble selon l'une quelconque des revendications 1 à 6, **caractérisé en ce que** la couche métallique (3) est telle qu'obtenue à partir d'une composition comprenant des nano-fils métalliques, et au moins un polymère et/ou au moins un précurseur de polymère.

8. Câble selon l'une quelconque des revendications précédentes, **caractérisé en ce que** la couche métallique (3) est directement en contact physique avec la couche électriquement isolante (2).

9. Câble selon l'une quelconque des revendications précédentes, **caractérisé en ce que** l'épaisseur de la couche métallique va de 20 nm à 1,0 mm.

10. Câble selon l'une quelconque des revendications précédentes, **caractérisé en ce que** la couche électriquement isolante (2) est une couche polymérique comprenant au moins un polymère d'éthylène, et de façon particulièrement préférée au moins un polymère d'éthylène fluoré (FEP).

11. Câble selon l'une quelconque des revendications précédentes, **caractérisé en ce que** la couche électriquement isolante (2) est une couche hydrophile.

12. Câble selon l'une quelconque des revendications précédentes, **caractérisé en ce qu'**il comprend en outre une gaine extérieure (4) de protection entourant la couche métallique (3).

13. Procédé de fabrication d'un câble selon l'une quelconque des revendications précédentes, **caractérisé en ce qu'**il comprend l'étape suivante :
iii. former la couche métallique (3) autour de la couche électriquement isolante (2).

14. Procédé de fabrication selon la revendication 13, **caractérisé en ce qu'**il comprend en outre l'étape ii suivante, préalable à l'étape iii : ii. traiter la surface extérieure de la couche électriquement isolante (2).

15. Procédé de fabrication selon la revendication 14, **caractérisé en ce que** l'étape ii consiste à oxyder la surface extérieure de la couche électriquement isolante (2).

## Patentansprüche

1. Stromkabel, umfassend:
- mindestens einen länglichen elektrischen Leiter (1),
- mindestens eine elektrisch isolierende Schicht (2), die den länglichen elektrischen Leiter (1) umgibt,
- mindestens eine Metallschicht (3), die die elektrisch isolierende Schicht (2) umgibt,
**dadurch gekennzeichnet, dass** die Metallschicht (3) metallische Nano-Drähte umfasst, die mindestens 80 Gew.-% Metall umfassen, wobei mindestens einer der metallischen Nano-Drähte einen Formfaktor von mindestens 50 hat, und dass die elektrisch isolierende Schicht eine Polymerschicht ist, die mindestens ein Olefinpolymer umfasst.

2. Kabel nach Anspruch 1, **dadurch gekennzeichnet, dass** mindestens einer der metallischen Nano-Drähte eine seiner Abmessungen von höchstens 400 nm hat.

3. Kabel nach einem der vorangehenden Ansprüche, **dadurch gekennzeichnet, dass** mindestens einer der metallischen Nano-Drähte mindestens ein Metall umfasst, das aus Silber, Gold, Kupfer, Nickel und einer ihrer Mischungen ausgewählt ist.

4. Kabel nach einem der vorangehenden Ansprüche, **dadurch gekennzeichnet, dass** mindestens einer der metallischen Nano-Drähte mindestens 10 Gew.-% Metall im Verhältnis zum Gesamtgewicht des Nano-Drahts umfasst.

5. Kabel nach einem der vorangehenden Ansprüche, **dadurch gekennzeichnet, dass** die Metallschicht (3) mindestens 5 Gew.-% metallische Nano-Drähte und vorzugsweise mindestens 10 Gew.-% metallische Nano-Drähte im Verhältnis zum Gesamtgewicht der Metallschicht umfasst.

6. Kabel nach einem der Ansprüche 1 bis 5, **dadurch gekennzeichnet, dass** die Metallschicht (3) derart ist, dass sie aus einer Zusammensetzung erhalten ist, die metallische Nano-Drähte und ein hydroxyliertes Lösungsmittel umfasst, wobei das Lösungsmittel verdampft wird, um die Metallschicht zu bilden.

7. Kabel nach einem der Ansprüche 1 bis 6, **dadurch gekennzeichnet, dass** die Metallschicht (3) derart ist, dass sie aus einer Zusammensetzung erhalten ist, die metallische Nano-Drähte und mindestens ein Polymer und/oder mindestens einen Polymervorläufer umfasst.

8. Kabel nach einem der vorangehenden Ansprüche, **dadurch gekennzeichnet, dass** die Metallschicht (3) direkt in physischem Kontakt mit der elektrisch isolierenden Schicht (2) ist.

9. Kabel nach einem der vorangehenden Ansprüche, **dadurch gekennzeichnet, dass** die Dicke der Metallschicht von 20 nm bis 1,0 mm reicht.

10. Kabel nach einem der vorangehenden Ansprüche, **dadurch gekennzeichnet, dass** die elektrisch isolierende Schicht (2) eine Polymerschicht ist, die mindestens ein Ethylenpolymer und besonders bevorzugt mindestens ein fluoriertes Ethylenpolymer (FEP) umfasst.

11. Kabel nach einem der vorangehenden Ansprüche, **dadurch gekennzeichnet, dass** die elektrisch isolierende Schicht (2) eine hydrophile Schicht ist.

12. Kabel nach einem der vorangehenden Ansprüche, **dadurch gekennzeichnet, dass** es ferner eine äußere Schutzhülle (4) umfasst, die die Metallschicht (3) umgibt.

13. Verfahren zur Herstellung eines Kabels nach einem der vorangehenden Ansprüche, **dadurch gekennzeichnet, dass** es den folgenden Schritt umfasst:
iii. Bilden der Metallschicht (3) um die elektrisch isolierende Schicht (2).

14. Herstellungsverfahren nach Anspruch 13, **dadurch gekennzeichnet, dass** es ferner den folgenden Schritt ii vor dem Schritt iii umfasst:
ii. Behandeln der äußeren Oberfläche der elektrisch isolierenden Schicht (2).

15. Herstellungsverfahren nach Anspruch 14, **dadurch gekennzeichnet, dass** der Schritt ii darin besteht, die äußere Oberfläche der elektrisch isolierenden Schicht (2) zu oxidieren.

## Claims

1. An electric cable comprising:
- at least one elongated electrical conductor (1),
- at least one electrically insulating layer (2) surrounding said elongated electrical conductor (1),
- at least one metal layer (3) surrounding said electrically insulating layer (2),
**characterized in that** the metal layer (3) comprises metal nanowires comprising at least 80% by weight of metal, at least one of the metal nanowires having a shape factor of at least 50, and **in that** the electrically insulating layer is a polymeric layer comprising at least one olefin polymer.

2. The cable according to claim 1, **characterized in that** at least one of the metal nanowires has one of its dimensions of at most 400 nm.

3. The cable according to any one of the preceding claims, **characterized in that** at least one of the metal nanowires comprises at least one metal chosen from silver, gold, copper, nickel and one of their mixtures.

4. The cable according to any one of the preceding claims, **characterized in that** at least one of the metal nanowires comprises at least 10% by weight of metal with respect to the total weight of said nanowire.

5. The cable according to any one of the preceding claims, **characterized in that** the metal layer (3) comprises at least 5% by weight of metal nanowires and preferably at least 10% by weight of metal nanowires, with respect to the total weight of the metal layer.

6. The cable according to any one of claims 1 to 5, **characterized in that** the metal layer (3) is as obtained from a composition comprising metal nanowires and a hydroxylated solvent by evaporating the solvent to form the metal layer.

7. The cable according to any one of claims 1 to 6, **characterized in that** the metal layer (3) is as obtained from a composition comprising metal nanowires and at least one polymer and/or at least one polymer precursor.

8. The cable according to any one of the preceding claims, **characterized in that** the metal layer (3) is directly in physical contact with the electrically insulating layer (2).

9. The cable according to any one of the preceding claims, **characterized in that** the thickness of the metal layer ranges from 20 nm to 1.0 mm.

10. The cable according to any one of the preceding claims, **characterized in that** the electrically insulating layer (2) is a polymeric layer comprising at least one ethylene polymer, and particularly preferably at least one fluoroethylene polymer (FEP).

11. The cable according to any one of the preceding claims, **characterized in that** the electrically insulating layer (2) is a hydrophilic layer.

12. The cable according to any one of the preceding claims, **characterized in that** it further comprises an exterior protective sheath (4) surrounding the metal layer (3).

13. A method for manufacturing a cable according to any one of the preceding claims, **characterized in that** it comprises the following step:
iii. forming the metal layer (3) around the electrically insulating layer (2).

14. The manufacturing method according to claim 13, **characterized in that** it further comprises the following step ii, prior to step iii:
ii. treating the exterior surface of the electrically insulating layer (2).

15. The method according to claim 14, **characterized in that** step ii consists in oxidizing the exterior surface of the electrically insulating layer (2).
